# EUROPEAN PATENT SPECIFICATION

(11) **EP 3 073 701 B1**
(45) Date of publication and mention of the grant of the patent: **04.10.2017**
(21) Application number: 15161362.7
(22) Date of filing: 27.03.2015
(51) Int. Cl.: H04L 29/06

(54) **NETWORK PROTECTION ENTITY AND METHOD FOR PROTECTING A COMMUNICATION NETWORK AGAINST FRAUD MESSAGES**
NETZWERKSCHUTZEINHEIT UND VERFAHREN ZUM SCHUTZ EINES KOMMUNIKATIONSNETZWERKS GEGEN BETRUGSNACHRICHTEN
ENTITÉ DE PROTECTION DE RÉSEAU ET PROCÉDÉ DE PROTECTION D'UN RÉSEAU DE COMMUNICATION CONTRE DES MESSAGES FRAUDULEUX

(43) Date of publication of application: 28.09.2016
(73) Proprietor: Deutsche Telekom AG, 53113 Bonn (DE)
(72) Inventor: van den Berge, Fridtjof, 53227 Bonn-Oberkassel (DE)
(74) Representative: Patentship Patentanwaltsgesellschaft mbH

(56) References cited:
- WO-A2-03/025697
- US-A1- 2012 023 593
- US-B1- 8 051 474

## Description

### TECHNICAL FIELD

The present disclosure relates to a network protection entity for protecting a communication network against fraud messages and to a method for protecting a communication network against fraud messages.

### BACKGROUND

Fraud messages against communication networks have been steadily increased during the last decades. Currently, there are about 195 countries or sovereign states worldwide with a potential to grow in numbers as ethnical and political conflicts arise in the last decades all over the globe. The number of both provider and destination networks is continuously growing, as e.g. data clouds are partly started by new conglomerates. The growth of mobile generated and/or destined IP-traffic will rise dramatically within the next years. As security on hand held devices is very prone to attacks, many of the (new) attacks occur in new fashions and on people and/or institutes which have a full trust in not being the target of attacks on their account(s). Just in the last five years the rise of IP criminality in Germany rose about 50 percent. Due to e.g. the existing HTTP-anonymity in IPv4 respectively RFC 4941 for the privacy extensions of stateless IPv6 addresses, no "guardians" are set nor an improvement may be expected. Neither transparency on IP addresses, nor a full working prevention or even tracking of IP criminality by national prosecution is to be expected in the near future.

The document US 2012 / 0023593 A1 describes a system and method for filtering internet content and blocking undesired websites by secure network appliance.

There is a need for better protection of communication networks against fraud messages of criminal users.

### SUMMARY

It is the object of the invention to provide such protection of communication networks against fraud messages.

This object is achieved by the features of the independent claims. Further implementation forms are apparent from the dependent claims, the description and the figures.

The essential idea of the invention is to prevent IP and port frauds from attacking a communication network by providing a network protection entity, e.g. a gateway or provider edge-router of the communication network with collecting its own intelligence which IP addresses and port numbers of communication messages to a destination within the receiving network (i.e. the above mentioned communication network for which the gateway or provider edge-router is responsible) would typically enter the gateway or provider edge-router on which interfaces and trunks. The specifics of these communication messages may be stored in tables within storage of the network protection entity for detecting fraud messages and avoiding these fraud messages to enter the communication network. The tables may be renewed in time intervals to allow for alterations in dynamic IP address configurations. The before mentioned tables will be set by sending out all possible combinations of IP-addresses and port-numbers with a time-to-live field that is set to a one, thus till the next hop. With this principle the network protection entity will set the appropriate interface and trunk to each specific IP-address and port-number in its table. All packets for one connection, i.e. IP-address with port-number of a source to an IP-address and port-number of the destination always use the same route, both coming in and going out.

When using such a set-up of the network protection entity or method by preference at the provider's edge of his network, IP fraud performed in any anonymous way and thus hard to get judged by an in most cases foreign prosecution, would die out as a way to send damaging software such as viruses to unaware users, as all IP-traffic which doesn't come in at the network protection entity's right interface and trunk will be dropped accordingly and thus doesn't enter the destination network for the traffic. When implementing these network protection entities or corresponding methods in networks, maliciously intended IP transfers to other users can only be performed successfully by using real IP addresses and ports. As such would be the case, every single damage, in any form, can be investigated more easily and brought faster and with a higher positive likelihood to justice, as is now the case in general.

In order to describe the invention in detail, the following terms, abbreviations and notations will be used:
- HPLMN:: Home Public Land Mobile Network
- IP:: Internet Protocol
- ISO:: International Standardization Organization
- ISP:: Internet Service Provider
- OSI:: Open Systems Interconnection Model
- PE:: Provider Edge; the edge of a network
- TTL:: Time-To-Live

Methods and devices according to the disclosure may be configured to provide OSI-layer 2 inspection of data packets or data frames. The OSI layer 2 Reference Model (officially known as ISO Standard 1984, 7498-1:1994 and CCITT standard X.200) was developed by the Internet Architecture Board and drafted by the IETF. OSI-layer 2 specifies the data link layer for a secure and free-of-failure transmission of datagrams. At this layer, data packets are encoded and decoded into bits. It furnishes transmission protocol knowledge and management and handles errors in the physical layer, flow control and frame synchronization. The data link layer is divided into two sub layers: The Media Access Control (MAC) layer and the Logical Link Control (LLC) layer. The MAC sub layer controls how a computer on the network gains access to the data and permission to transmit it. The LLC layer controls frame synchronization, flow control and error checking.

Methods and devices according to the disclosure may use an appropriate table (or simply a table) for indicating a dedicated source address and a dedicated port number for the physical interface and the associated connection trunk to a destination within the receiving network. Appropriate means hereinafter that any table may be used that is appropriate or suitable or adapted for storing a dedicated source address and a dedicated port number for the physical interface and the associated connection trunk. The table may be ordered as a dynamic array, as a simple table including columns and rows or as any other kind of memory structure usable for that purpose. The table may be adapted for storing a mapping of the dedicated source address and the dedicated port number to the physical interface and the associated connection trunk.

The following is written without the addition that a message sent to the receiving network is intended for reception by an IP-address and port-number of the destination.

All packets for one connection, i.e. IP-address with port-number of a source to an IP-address and port-number of the destination always use the same route, both coming in and going out.

According to a first aspect, the invention relates to a network protection entity for protecting a communication network against fraud messages, the network protection element comprising: a physical interface and a connectivity-line with its possibly several defined trunks associated to the physical interface and configured to receive a communication message, the communication message comprising a message source address and a port number. The network protection entity further includes a storage for the storing of the before mentioned appropriate table, the appropriate table indicates only one dedicated source address with port for the physical interface with a trunk of the network protection entity; and a processor configured to retrieve the at least one allowed source address with port number from the storage and to compare the message source address and its port with the only one dedicated source IP-address with dedicated port, wherein the processor is further configured to discard the communication message if the message source address and port differs from the stored entrance entity of interface and trunk to the specific IP-address and port, under which the datagram entered the network protection entity.

This is achieved by providing the network protection entity, e.g. a gateway or router at the provider's edge of the communication network with collecting its own intelligence on which message source addresses and ports of communication messages would typically enter the network protection entity on which physical interface and specific trunk. The specifics of these communication messages are stored in the appropriate table within the storage of the network protection entity for detecting fraud messages and avoiding these fraud messages to enter the communication network simply by discarding communication messages which message source address with port differs from the allowed source address(es) with the appropriate port to the physical interface with a trunk of the network protection entity stored in the appropriate table.

In one implementation form according to the first aspect, the processor is configured to create the content of the appropriate table based on IP messages which it sent out to fill the before mentioned table over the physical interface and trunk, in which the IP messages sent out to fill it have a time-to-live field which is set to one.

This provides the advantage that a trust relation may be initiated by storing only those communications messages specifics in the appropriate table by sending the before mentioned messages with a Time-To-Live (TTL) field set to one. At the other, the receiving, end of the transmission a TTL=1 field indicates to the receiving node that the message came in from the last hop to the node and with that the TTL= 1 becomes the TTL= 0 and will be discarded.

In one implementation form according to the first aspect, the physical interface comprises a connection trunk configured to receive the communication message; and the appropriate table indicates the at least one allowed source IP-address with a specific port for a combination of the physical interface and the connection trunk on which a such a datagram should enter the network protection entity.

When the appropriate table stores allowed source IP-addresses with the specific ports for a combination of a physical interface and the associated connection trunk on that physical interface, the detection and defense against fraud messages can be further improved because a higher degree of configuration information is required. The attacker would in extreme cases to cause damage(s) requires more information and insight into the specific gateway/router configuration to generate fraud messages for only one specific attack in whatever form over datagram that are able to pass the network protection entity.

In one implementation form according to the first aspect, the message source address of the communication message comprises an IP-source address and a port number; and the appropriate table indicates an allowed combination of an IP source address and a port number for the combination of the physical interface and the connection trunk.

When the appropriate table stores allowed source addresses/port combinations for existing combinations of physical interface/connection trunk combinations a still better protection against fraud messages can be realized because a yet higher degree of configuration information is required, as by preference only the destination network and its administrators only have the here for required insights on a configuration of each network protection entity. The attacker would have to know which source addresses and port numbers are transmitted on which physical interfaces and connection trunks of a specific network protection entity, in accordance to each different route through the internet as several routes from source to destination may exist. Therefore it is would become extremely more difficult and would also consume extremely more time to generate fraud messages that are able to pass the here described network protection entity solution to prevent IP-fraud in the own network.

In one implementation form according to the first aspect, the message source address with port of the communication message further comprises a network mask, a number of bytes for maximum transmission unit and speed information; and the appropriate table indicates an allowed combination of an IP source address, and port number for the combination of the physical interface and the connection trunk. The e. g. network mask, a number of bytes for maximum transmission unit and speed information, which are also in the IP-header of a datagram aren't checked for the herein described IP-fraud prevention method.

When the appropriate table allows only the specific stored parameters in the combinations of source address, port number, network mask, number of bytes for maximum transmission unit and speed information, etc. in an IP-headerfor specific combinations of physical interface and connection trunk a very high degree of protection against fraud messages can be realized because a large number of configuration information is required in dependence with the possible connectivity-variants of possibly multi- network protection entities. The attacker has to know by which routing which IP-source address and port number, with further e. g. a network mask, number of bytes for maximum transmission unit and speed are used for transmission on which combination of physical interface and connection trunk at a specific network protection entity. Therefore it is very difficult to generate fraud messages with the use of not correct source parameter that are able to pass the possibly multi-network protection entities.

In one implementation form according to the first aspect, the processor is configured to renew the appropriate table on a time interval basis in order to allow valid communication messages which message source addresses are dynamically changed to enter the communication network.

The tables may be renewed in time intervals to allow dynamic IP address configuration, for example to allow DHCP configuration of IP addresses or to allow HTTP-anonymity in IPv4 respectively RFC 4941 for the privacy extensions of stateless IPv6 addresses.

In one implementation form according to the first aspect, the processor is configured to retrieve the message source address and port-number of the communication message based on OSI-layer-2 inspection.

This provides the advantage that OSI-layer 2 (or data link layer) is a low layer in the ISO-OSI Reference Model; therefore computational complexity for inspection of data packets on that second layer is low. Hence, the computational complexity for the processor implementing OSI-layer 2 inspection is low which results in a fast execution of each inspection in which the checking of the source address with port is performed.

In one implementation form according to the first aspect, the processor is further configured to set an alarm before discarding the communication message when the message source IP-address and/or port-number of the communication message differ(s) from the interface and trunk-ID in its appropriate table to the way it came in the network protection entity from the internet for a further transmission to its destination.

This provides the advantage that detection of a fraud message and its source address with port can be protocolled and the aggressor may be backtracked.

In one implementation form according to the first aspect, the network protection entity comprises a configuration interface for filling the appropriate table with configurable values.

This provides the advantage that the appropriate table can be filled manually by an operator or automatically upon request.

In one implementation form according to the first aspect, the network protection entity is one of a gateway, resp. of a PE-router.

This provides the advantage that a gateway, resp. of a PE-router that is used for managing a communication network can be used for implementing the network protection entity. Hence, no new network elements have to be installed, but only an enhancement for the here described feature should be implemented.

According to a second aspect, the invention relates to a method for protecting a communication network against fraud messages coming to the network, the method comprising: receiving a communication message over a physical interface and trunk, the communication message comprising a message source address with a port-number; providing a appropriate table, the appropriate table indicating at least one allowed source IP-address with a specific port-number for the physical interface and trunk; retrieving the at least one allowed source address from the appropriate table and comparing the message source address with the at least one allowed source address; and discarding the message if the message source address differs from the only one dedicated source address with port for the physical interface with a trunk of the network protection entity.

Such a network protection method provides a better protection of the communication networks against fraud messages of criminal users. This is achieved by providing an appropriate table for collecting its own intelligence which message source addresses of communication messages would typically be received on which physical interface and trunk. The specifics of these communication messages are stored in the appropriate table for detecting fraud messages and avoiding these fraud messages to enter the communication network simply by discarding communication messages which message source address and port-number differ from their entry in the network protection entity the stored proper interface and trunk for the used IP-address and port-number of the message in the appropriate table.

In one implementation form according to the second aspect, the method comprises: providing the appropriate table based on IP-routing of sent messages over the appropriate physical interface and trunk, in which IP messages have a time-to-live field which is set to one.

This provides the advantage that a trust relation may be initiated by storing only those communications messages specifics to the IP-routing in the appropriate table which were gathered by sending identical messages in which the Time-To-Live (TTL) field was set to a one. Such a TTL=1 field indicates to the receiving node that the message came in from the last hop to the node and with that the TTL= 1 becomes the TTL= 0 and will be discarded.

In one implementation form according to the second aspect, the method comprises: receiving the communication message over a connection trunk of the physical interface; and providing the appropriate table indicating the at least one allowed source IP-address with a specific port for a combination of the physical interface and the connection trunk on which a such a datagram should enter the network protection entity.

When the appropriate table stores allowed source IP-addresses with the specific ports for a combination of a physical interface and the associated connection trunk on that physical interface, the detection and defense against fraud messages can be further improved because a higher degree of configuration information is required. The attacker would in extreme cases to cause damage(s) requires more information and insight into the specific gateway/router configuration to generate fraud messages for only one specific attack in whatever form over datagram that are able to pass the protection method.

In one implementation form according to the second aspect, the method comprises: receiving the communication message, the message source address of the communication message comprising an IP source address and a port number; and discarding the communication message if the IP source address and the port number differ from an allowed combination of an IP source address and a port number for a combination of the physical interface and the connection trunk.

When the appropriate table stores allowed source addresses/port combinations for existing combinations of physical interface/connection trunk combinations a still better protection against fraud messages can be realized because a yet higher degree of configuration information is required, as by preference only the destination network and its administrators only have the here for required insights on a configuration of each network protection entity. The attacker would have to know which source addresses and port numbers are transmitted on which physical interfaces and connection trunks of a specific network protection entity, in accordance to each different route through the internet as several routes from source to destination may exist. Therefore it is would become extremely more difficult and would also consume extremely more time to generate fraud messages that are able to pass the here described network protection entity solution to prevent IP-fraud in the own network.

Such a program code can be easily implemented on existing gateway resp. of a PE-router and upgrade these devices to network protection entities according to the disclosure.

### BRIEF DESCRIPTION OF THE DRAWINGS

Further embodiments of the invention will be described with respect to the following figures, in which:
Fig. 1 shows a block diagram illustrating a network protection entity 100 for protecting a communication network against fraud messages in an operating mode according to an implementation form;
Fig. 2 shows a block diagram illustrating the network protection entity 100 shown in Fig. 1 in a configuration mode to gather the interface and trunk parameter to IP-addresses and ports according to an implementation form;
Fig. 3 shows a 3-dimensional view of a gateway 300 as an implementation of a network protection entity according to an implementation form;
Fig. 4 shows a block diagram illustrating a communication system 400 comprising a home communication network protected by a network protection entity 100 against fraud messages according to an implementation form; and
Fig. 5 shows a schematic diagram illustrating a method 500 for protecting a communication network against fraud messages according to an implementation form.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

In the following description, methods and devices for protecting communication networks against fraud messages are described. The described devices and systems point at functionalities, but may be named differently depending on e. g. manufacturer and development-status of such nodes, may include integrated circuits and/or passives and may be manufactured according to various technologies. For example, the circuits may include logic integrated circuits, analog integrated circuits, mixed signal integrated circuits, optical circuits, memory circuits and/or integrated passives.

In the following description, methods and devices for exploiting the Time-To-Live message field of communication messages, in particular IP messages are described. Time to live (TTL) or hop limit is a mechanism that limits the lifespan or lifetime of data in a computer or network. TTL may be implemented as a counter or a timestamp attached to or embedded in the data. Once the prescribed event count or timespan has elapsed, data is discarded. TTL prevents a data packet from circulating indefinitely. TTL further describes a proximity relation between two network entities. A reduction of the TTL filed characterizes a distance (in time or space) between two network entities.

Under the Internet Protocol (IP), TTL is an 8-bit field. In the IPv4 header, TTL is the 9^{th} octet of 20. In the IPv6 header, TTL is the 8th octet of 40. The maximum TTL value is 255, the maximum value of a single octet. The time-to-live value can represent an upper bound on the time that an IP datagram can exist in an Internet system. The TTL field is set by the sender of the datagram, and reduced by every router on the route to its destination. The purpose of the TTL field is to avoid a situation in which an undeliverable datagram keeps circulating on an Internet system in order to provide a stable performance. Under IPv4, time to live is measured in seconds; every host that passes the datagram must reduce the TTL by at least one unit. In practice, however, the TTL field is reduced by one on every hop. To reflect this practice, the field is renamed as hop limit in IPv6.

In the following description, methods and devices that are based on trunks or connection trunks are described. Trunking is referred to as a method for providing network access to many clients by sharing a set of lines or accesses instead of providing them individually. A trunk may be defined as a permanent point-to-point communication line between two ports of a communication entity, e.g. a gateway. In the context of Ethernet, the term Ethernet trunking specifies carrying multiple VLANs (virtual local area networks) through a single network link through the use of a trunking protocol. To allow for multiple VLANs on one link, frames from individual VLANs are identified.

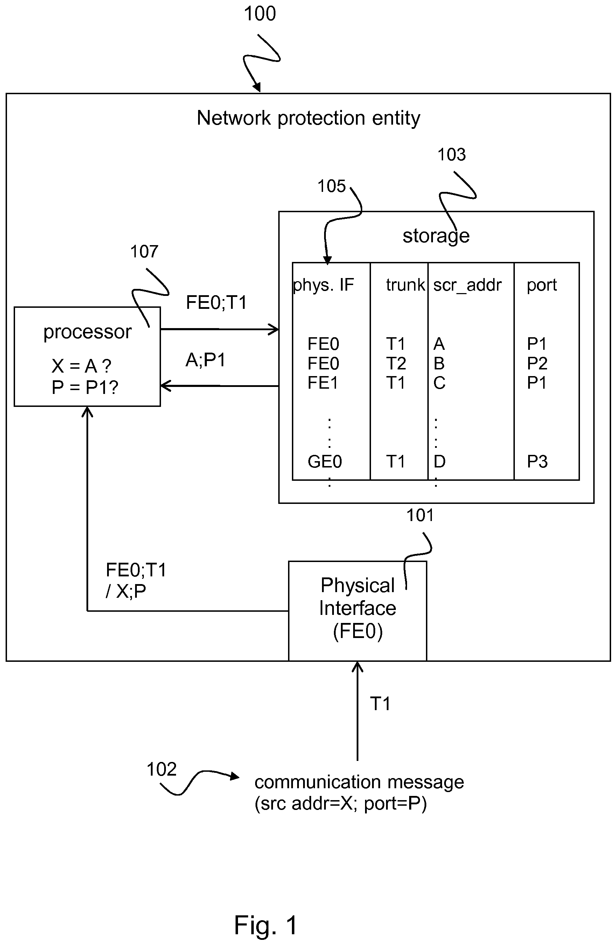

Fig. 1 shows a block diagram illustrating a network protection entity 100 for protecting a communication network against fraud messages in an operating mode according to an implementation form.

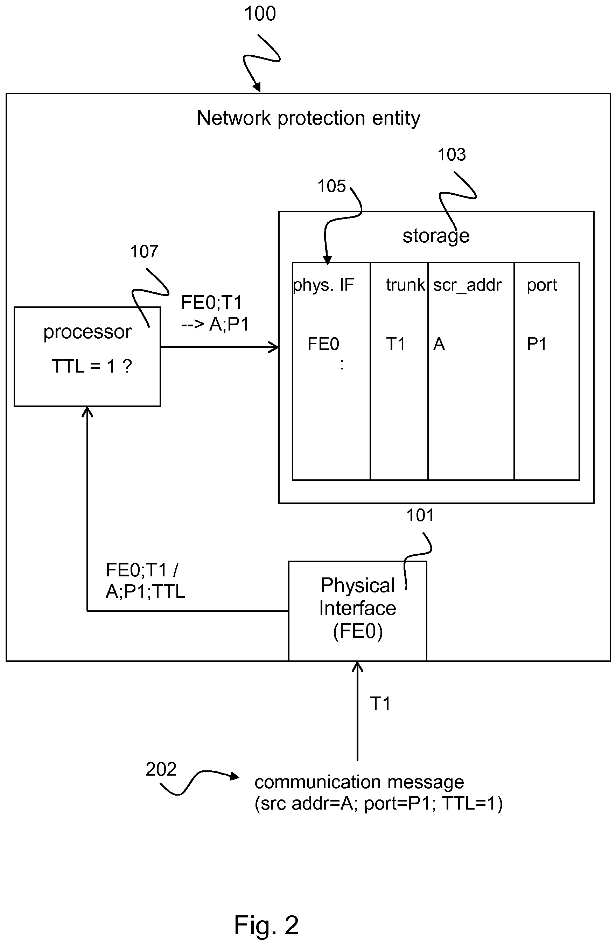

The network protection entity 100 includes a physical interface 101, FE0, a storage 103 and a processor 107. The physical interface 101, FE0 is configured to receive a communication message 102. The communication message 102 includes a message source address X. The storage 103 is used for storing an appropriate table 105. The appropriate table 105 indicates at least one allowed source address A for the physical interface 101, FE0. The processor 107 is configured to retrieve the one or more allowed source addresses A from the storage 103 and to compare the message source address X with the one or more allowed source addresses A. The processor 107 is further configured to discard the communication message 102 if the message source address X differs from the at least one allowed source address A. The processor 107 may create the appropriate table 105 based on IP messages received over the physical interface 101, FE0, in which IP messages a time-to-live field is set to one, e.g. as described below with respect to Fig. 2. The physical interface 101, FE0 may include a connection trunk configured to receive the communication message 102. The appropriate table 105 may indicate the at least one allowed source address A for a combination of the physical interface 101, FE0 and the connection trunk.

The message source address X of the communication message 102 may include an IP source address and a port number. The appropriate table 105 may indicate an allowed combination of an IP source address and a port number for the combination of the physical interface 101, FE0 and the connection trunk. The message source address X of the communication message 102 may further include a network mask, a number of bytes for maximum transmission unit and speed information. The appropriate table 105 may indicate an allowed combination of an IP source address, a port number, a network mask, a number of bytes for maximum transmission unit and speed information for the combination of the physical interface 101, FE0 and the connection trunk.

The processor 107 may renew the appropriate table 105 on a time interval basis in order to allow valid communication messages 102 which message source addresses X are dynamically changed to enter the communication network. The processor 107 may be configured to retrieve the message source address X of the communication message 102 based on OSI-layer-2 inspection.

The processor 107 may set an alarm before discarding the communication message 102 when the message source address X of the communication message 102 differs from the at least one allowed source address A. The network protection entity 100 may include a configuration interface for filling the appropriate table 105 with configurable values.

The network protection entity 100 may be a gateway, a router or a PE router, for example.

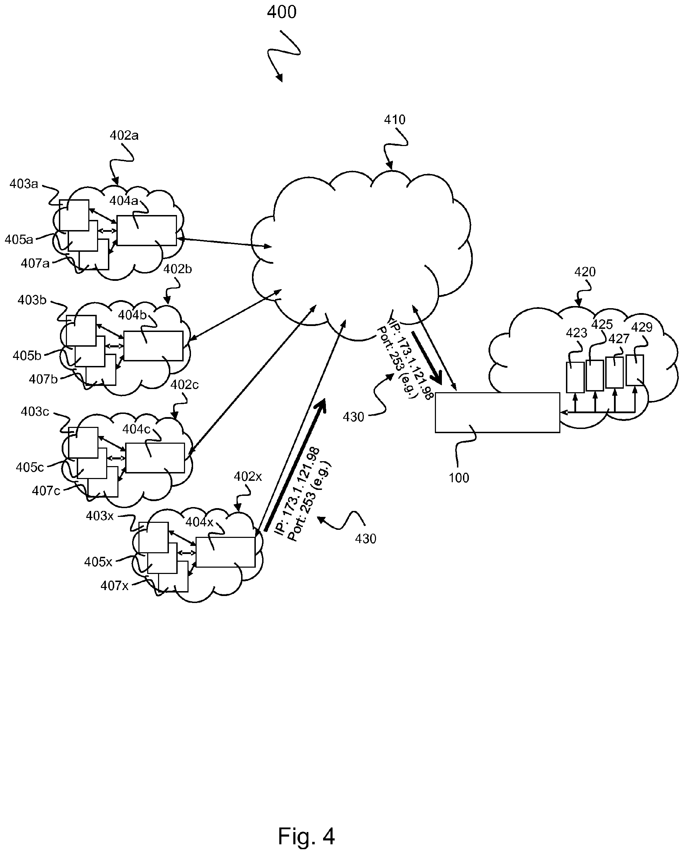

The network protection entity 100 shown in Fig. 1 is illustrated in an operating mode, i.e. one or more communication messages 102 arrive at the physical interface 101, FE0 with source address X and port P and the processor 107 checks if the source address X and port number P of the communication message 102 is stored together with an identifier FE0, 101 of the physical interface FE0 and the connection trunk T1 in the appropriate table 105 of the storage 103. If source address X and port P are stored in the table as an allowed entry for the interface FE0 and the connection trunk T1, then the communication message 102 is allowed to enter the communication network (not shown in Fig. 1, see Fig. 4 for example), otherwise the communication message 102 is not allowed to pass and may be discarded. The appropriate table 105 may include multiple source addresses and port numbers that are allowed for respective physical interfaces and connection trunks, e.g. address B with port P2 for physical interface FE0 and connection trunk T2 or address C with port P1 for physical interface FE1 and connection trunk T1. The appropriate table 105 may include multiple physical interfaces and multiple connections trunks per physical interface, for example source address A and port P1 allowed for physical interface FE0 and trunk T1, source address B and port P2 allowed for physical interface FE1 and trunk T2, source address C and port P1 allowed for physical interface FE1 and trunk T1, source address D and port P3 allowed for physical interface GE0 and trunk T1 as one example depicted in Fig 1.

While Fig. 1 illustrates an operation mode of the network protection entity 100 where the appropriate table 105 is existing and filled with allowed address information, Fig. 2 illustrates the configuration mode in which the network protection entity 100 gains information for filling the appropriate table 105.

Fig. 2 shows a block diagram illustrating the network protection entity 100 shown in Fig. 1 in a configuration mode according to an implementation form. The network protection entity 100 shown in Fig. 2 corresponds to the network protection entity 100 shown in Fig. 1. Fig. 2 illustrates the exemplary configuration of the appropriate table 105 according to an example. When a trust message 202 arrives at the physical interface 101, for example an IP message which includes a message field, for example in a header of the IP message, indicating a time-to-live equal to one, the network protection entity 100 assumes that this message originates from the next network element, for example next hop router or gateway, i.e. a safe network element that is not corrupted by a malicious attacker. Hence the message source address of this trust message 202 is treated as a valid source address that may be used for filling the appropriate table 105.

The processor 107 checks if a TTL message field is included in the trust message 202 and if such a trust relation exists, the source address A and port number P1 of the trust message 202 is stored together with the identifier FE0 of the physical interface 101 and the connection trunk T1 in the appropriate table 105. If the incoming message carries a TTL=1, it will be discarded as the receiving node abstracts 1 from the TTL-value and can't forward it anymore and it will be discarded.

Alternatively, other trust relations may be applied for checking if a message 202 originates from a safe network element. For example even a TTL being equal to 2 or higher values can be used if the network configuration is known. For example, if the message passes a lot of routers in a non-anonymous network, such as an internet for example, the TTL value can be increased by the number of known network elements a message has to pass before arriving at the physical interface 101. Instead of the TTL field other message fields from the communication message may be used that provide a trust relation that cannot be manipulated, e.g. based on a time stamp or a sequence number, etc.

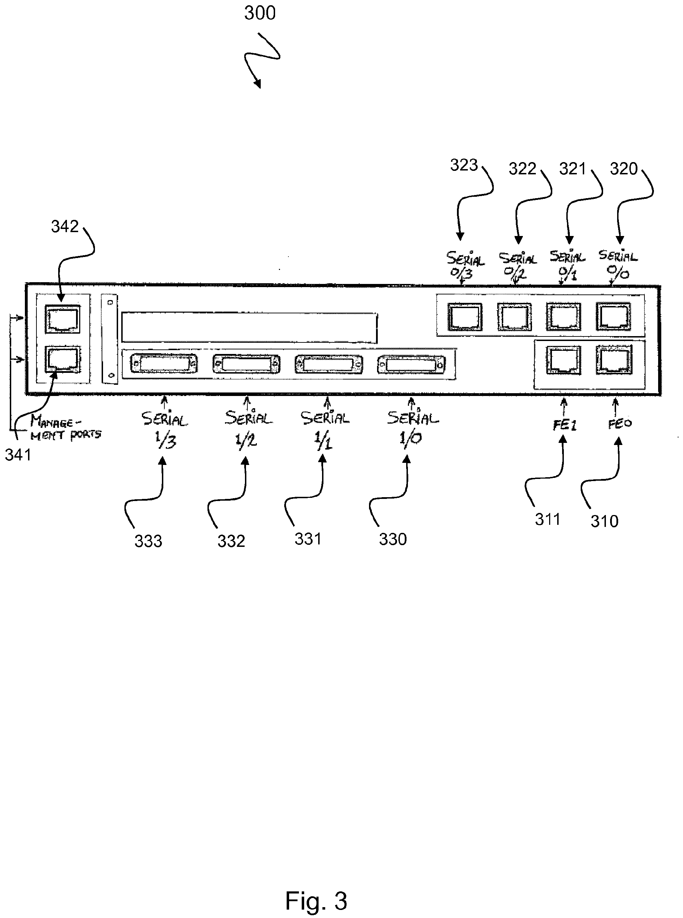

Fig. 3 shows a 3-dimensional view of a gateway 300 as an implementation of a network protection entity according to an implementation form. The gateway 300 is one exemplary implementation example of a network protection entity 100 as described above with respect to Figures 1 and 2. Other examples are PE-routers and other network entities with a routing functionality at a network's edge. The exemplary gateway 300 shown in Fig. 3 includes two fast Ethernet interfaces FE0 310, FE1 311, four serial interfaces 0/0 320, 0/1 321, 0/2 322, 0/3 323 of a first type, four serial interfaces 1/0 330, 1/1 331, 1/2 332, 1/3 333 of a second type and two management interfaces 341, 342. Of course any other interface configuration may be implemented.

The gateway 300 of a communication network starts with collecting its own intelligence on which IP-addresses with which ports messages arrive on which interfaces and trunks. The specifics of these, e.g. disclosed through TTL=1 messages are stored in tables and renewed in the tables in time intervals for future comparisons. Each packet is checked on its way it enters the gateway with a specific IP-address and port. This is translated in the interface and trunk on OSI-layer 2.

For example, the message source address field "142.213.32.1 1000 1500 80" may denote an IPv4-address 142.213.32.1 255.255.255.252 respectively 142.213.32.1/30 with speed 1.000 MB/s, maximum transmission unit (MTU) of 1.500 bytes and port 80.

The exemplary expression "FE0/9 access up" may denote the interface fast Ethernet 0/9 in upstream direction. The entry "FE0/22 trunk" or "channel-group 22 mode" may denote the 22^{nd} trunk also referred to as channel group 22.

If these parameters together with specific IP-addresses and ports are set in the database respectively the tables of the gateway (or PE-router), no access is granted to any alleged IP-addresses and port numbers, as they might come in on wrong interfaces and/or trunks.

Fig. 4 shows a block diagram illustrating a communication system 400 comprising a home communication network protected by a network protection entity 100 against fraud messages according to an implementation form.

The communication system 400 includes a home communication network 420, e.g. a HPLMN (Home Public Land Mobile Network) and a Home ISP (Internet Service Provider), coupled by a network protection entity, e.g. a device 100 as described above with respect to Figures 1 to 3, e.g. a gateway or router, to the World Wide Web 410 or to another transport communication network. A plurality of foreign internet service provider (ISP) networks 402a, 402b, 402c, 402x are coupled by corresponding gateways 404a, 404b, 404c, 404x to the World Wide Web 410 for enabling communication with the communication network 420. Each of the foreign internet service provider (ISP) networks 402a, 402b, 402c, 402x includes a plurality of client terminals. In Fig. 4 the first foreign internet service provider (ISP) network 402a includes the client terminals 403a, 405a, 407a; the second foreign internet service provider (ISP) network 402b includes the client terminals 403b, 405b, 407b; the third foreign internet service provider (ISP) network 402c includes the client terminals 403c, 405c, 407c; and the fourth foreign internet service provider (ISP) network 402x includes the client terminals 403x, 405x, 407x. However, any other number of foreign internet service provider (ISP) networks and any other number of corresponding client terminals can be applied.

In the communication system 400 one terminal, for example terminal 407x, represents the malicious attacker that is sending a fraud message 430 with damaging content in IP packet string under the (exemplary) faked IP address 173.1.121.98 and the (exemplary) port number 253 to a customer of the home communication network 420, i.e. to a destination address of one of the client terminals 423, 425, 427, 429. The fraud message 430 passes the World Wide Web 410 and is transported to the network protection entity 100 which receives the fraud message 430.

Due to the configuration of the network protection entity 100 as described above with respect to Figures 1 to 3, the IP packets under faked IP 173.1.121.98 and port number 253 arrive at the network protection entity 100 on a wrong interface and trunk, i.e., an interface and trunk combination for which the IP address and port number 173.1.121.98/31 253) are not stored in the appropriate table. As a consequence the fraud message 430 is dropped and it does not enter the home communication network 420.

In an exemplary implementation, the appropriate table of the network protection entity 100 may include an IPv4-string under "142.213.32.1 1000 1500 80" arriving on the interface FE0/9 with a channel group 22 trunk. The same interface with the identical trunk may also stand for numerous other IP-addresses and ports. However, not all IP-addresses with ports have an identical mapping in order to come to a balanced load on all interfaces and trunks.

The alleged or faked IPv4-address IP 173.1.121.98 and port number 253 used by the party who sent out the malicious content towards a client terminal of the home communication network 420 will arrive from the internet 410 towards the network protection entity 100, e.g. gateway through the interface FE0/9 and the 22^{nd} trunk, which aren't the values stored in its database, i.e. appropriate table for IP 173.1.121.98 with port 253. As the packet arrives on a wrong interfaces and/or trunk, the network protection entity 100 or gateway drops the packet 430. As described above, the correct IP-address and port may be 142.213.32.1 with port number 80, but not the faked 173.1.121.98 with port number 253 under which it was sent.

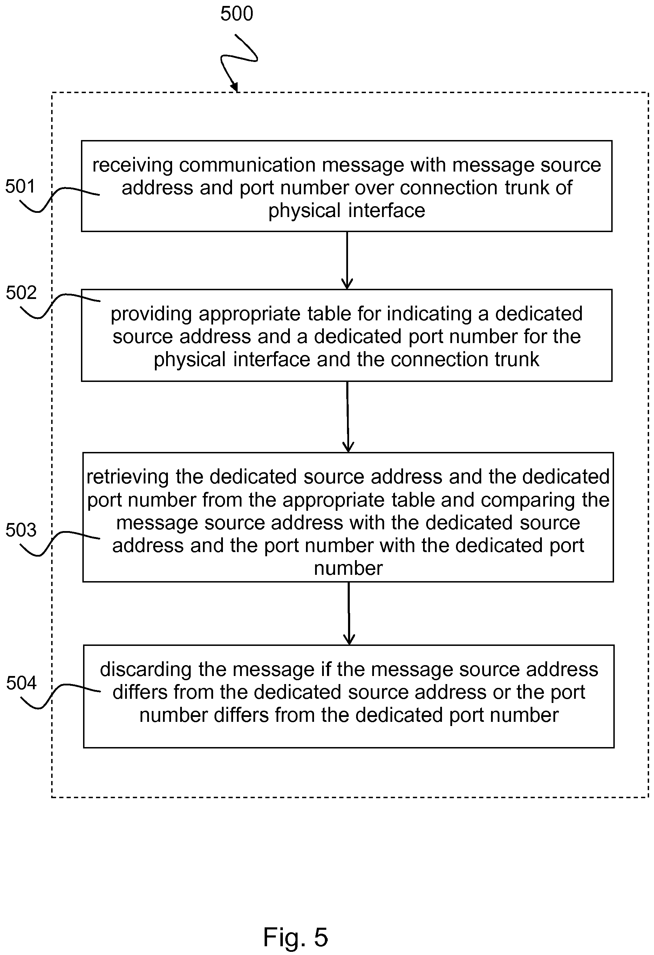

Fig. 5 shows a schematic diagram illustrating a method 500 for protecting a communication network against fraud messages according to an implementation form.

The method 500 includes receiving 501 a communication message over a physical interface, e.g. a physical interface 101 as described above with respect to Figures 1 and 2 or a physical interface 310, 311, 320, 321, 322, 323, 330, 331, 332, 333 as described above with respect to Figure 3. The communication message includes a message source address, e.g. a message source address X as described above with respect to Fig. 1 and a port number, e.g. a port number P as described above with respect to Fig. 1. The method 500 further includes: providing 502 an appropriate table, e.g. an appropriate table 105 as described above with respect to Figures 1 and 2, the appropriate table indicating a dedicated source address and a dedicated connection trunk for the physical interface and the trunk; retrieving 503 the dedicated source address including its specific (i.e. dedicated) port from the appropriate table and comparing the message source address and the port with the dedicated source address and the dedicated connection trunk, as described herein; and discarding 504 the message if the message source address differs from the dedicated source address or if the port number differs from the dedicated port number.

The method 500 may include providing 502 the appropriate table based on IP messages which were sent out over a physical interface and trunk, in which IP messages a time-to-live field was set to one, e.g. as described above with respect to Fig. 2. The method 500 may include receiving 501 the communication message over a connection trunk of the physical interface; and providing 502 the appropriate table indicating the dedicated source address for a combination of the physical interface and the connection trunk, e.g. as described above with respect to Fig. 1. The method 500 may include receiving 502 the communication message, the message source address of the communication message comprising an IP source address and a port number; and discarding 504 the communication message if the IP source address and the port number differ from an allowed combination of an IP source address and a port number for a combination of the physical interface and the connection trunk, e.g. as described above with respect to Figures 1, 2 and 4.

The methods, systems and devices described herein may be implemented as electrical and/or optical circuit within a chip or an integrated circuit or an application specific integrated circuit (ASIC). The invention can be implemented in digital and/or analogue electronic and optical circuitry.

The methods, systems and devices described herein may be implemented as software in a Digital Signal Processor (DSP), in a micro-controller or in any other side-processor or as hardware circuit within an application specific integrated circuit (ASIC) of a Digital Signal Processor (DSP).

The invention can be implemented in digital electronic circuitry, or in computer hardware, firmware, software, or in combinations thereof, e.g. in available hardware of conventional optical transceiver devices or in new hardware dedicated for processing the methods described herein.

The present disclosure also supports a computer program product including computer executable code or computer executable instructions that, when executed, causes at least one computer to execute the performing and computing steps described herein, in particular the method 500 as described above with respect to Fig. 5 and the techniques described above with respect to Figs. 1 to 4. Such a computer program product may include a readable storage medium storing program code thereon for use by a computer. The program code may perform the method 500 as described above with respect to Fig. 5.

The following pertains to specific examples according to the invention.

Example 1 is a network protection entity for protecting a communication network against fraud messages, the network protection element comprising: a physical interface comprising a connection trunk associated to the physical interface for receiving a communication message, wherein the communication message comprises a message source address and a port number and wherein the communication message is directed to a destination within the communication network; a storage for storing an appropriate table which appropriate table is appropriate for indicating a dedicated source address and a dedicated port number for the physical interface and the associated connection trunk; and a processor configured to retrieve the dedicated source address and the dedicated port number from the storage and to compare the message source address with the dedicated source address and the port number with the dedicated port number, wherein the processor is further configured to discard the communication message if either the message source address differs from the dedicated source address or the port number differs from the dedicated port number.

In Example 2, the subject matter of Example 1 may optionally include that the processor is configured to create a content of the appropriate table based on IP messages sent out over the physical interface, in which IP messages a time-to-live field was set to one.

In Example 3 the subject matter of any one of Examples 1-2 may optionally include that the appropriate table indicates the dedicated source address and the dedicated port number for a combination of the physical interface and the associated connection trunk.

In Example 4, the subject matter of Example 3 may optionally include that the appropriate table indicates an allowed combination of an IP source address and a port number for the combination of the physical interface and the associated connection trunk.

In Example 5, the subject matter of Example 4 may optionally include that the message source address and the associated port number of the communication message further comprise a network mask, a number of bytes for maximum transmission unit and speed information; and that the appropriate table indicates an allowed combination of an IP source address and a port number for the combination of the physical interface and the associated connection trunk.

In Example 6 the subject matter of any one of Examples 1-5 may optionally include that the processor is configured to renew the appropriate table on a time interval basis in order to allow valid communication messages which message source addresses are dynamically changed to enter the communication network.

In Example 7 the subject matter of any one of Examples 1-6 may optionally include that the processor is configured to retrieve the message source address and the port number of the communication message based on OSI-layer-2 inspection.

In Example 8 the subject matter of any one of Examples 1-7 may optionally include that the processor is further configured to set an alarm before discarding the communication message when the message source address of the communication message differs from the dedicated source address or when the port number of the communication message differs from the dedicated port number.

In Example 9 the subject matter of any one of Examples 1-8 may optionally include a configuration interface for filling the appropriate table with configurable values.

In Example 10 the subject matter of any one of Examples 1-9 may optionally include that the network protection entity is one of a gateway or a router, in particular a provider-edge router.

Example 11 is a method for protecting a communication network against fraud messages, the method comprising: receiving a communication message over a connection trunk of a physical interface, wherein the communication message comprises a message source address and a port number and wherein the communication message is directed to a destination within the communication network; providing an appropriate table which appropriate table is appropriate for indicating a dedicated source address and a dedicated port number for the physical interface and the connection trunk; retrieving the dedicated source address and the dedicated port number from the storage and to comparing the message source address with the dedicated source address and the port number with the dedicated port number; and discarding the communication message if either the message source address differs from the dedicated source address or the port number differs from the dedicated port number.

In Example 12 the subject matter of Example 11 may optionally include: providing the appropriate table based on IP messages sent out over the physical interface, in which IP messages a time-to-live field was set to one.

In Example 13 the subject matter of any one of Examples 11-12 may optionally include: providing the appropriate table indicating the dedicated source address and the dedicated port number for a combination of the physical interface and the connection trunk.

In Example 14 the subject matter of Example 13 may optionally include: receiving the communication message, the message source address of the communication message comprising an IP source address and a port number; and discarding the communication message if the IP source address and the port number differ from an allowed combination of an IP source address and a port number for a combination of the physical interface and the connection trunk.

Example 15 is a computer program comprising a program code for executing the method according to any one of Examples 11 to 14 when run on a computer.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims the invention may be practiced otherwise than as specifically described herein.

## Claims

1. A network protection entity (100) for protecting a communication network against fraud messages, the network protection element (100) comprising:
a physical interface (101, FE0) comprising a connection trunk (T1) associated to the physical interface (FE0) for receiving a communication message (102), wherein the communication message (102) comprises a message source address (X) and a port number (P) and wherein the communication message is directed to a destination within the communication network;
a storage (103) for storing an appropriate table (105) which appropriate table (105) is appropriate for indicating a dedicated source address (A) and a dedicated port number (P1) for the physical interface (101, FE0) and the associated connection trunk (T1); and
a processor (107) configured to retrieve the dedicated source address (A) and the dedicated port number (P) from the storage (103) and to compare the message source address (X) with the dedicated source address (A) and the port number (P) with the dedicated port number (P1), wherein the processor (107) is further configured to discard the communication message (102) if either the message source address (X) differs from the dedicated source address (A) or the port number (P) differs from the dedicated port number (P1),
**characterized in that** the processor (107) is configured to create a content of the appropriate table (105) based on IP messages sent out over the physical interface (101, FE0), in which IP messages a time-to-live field was set to one.

2. The network protection entity (100) of claim 1,
wherein the appropriate table (105) indicates the dedicated source address (A) and the dedicated port number (P) for a combination of the physical interface (101, FE0) and the associated connection trunk (T1).

3. The network protection entity (100) of claim 2,
wherein the appropriate table (105) indicates an allowed combination of an IP source address (X) and a port number (P) for the combination of the physical interface (101, FE0) and the associated connection trunk (T1).

4. The network protection entity (100) of claim 3,
wherein the message source address (X) and the associated port number (P) of the communication message (102) further comprises a network mask, a number of bytes for maximum transmission unit and speed information; and
wherein the appropriate table (105) indicates an allowed combination of an IP source address (X) and a port number (P) for the combination of the physical interface (101, FE0) and the associated connection trunk (T1).

5. The network protection entity (100) of one of the preceding claims,
wherein the processor (107) is configured to renew the appropriate table (105) on a time interval basis in order to allow valid communication messages (102) which message source addresses (X) are dynamically changed to enter the communication network.

6. The network protection entity (100) of one of the preceding claims,
wherein the processor (107) is configured to retrieve the message source address (X) and the port number (P) of the communication message (102) based on OSI-layer-2 inspection.

7. The network protection entity (100) of one of the preceding claims,
wherein the processor (107) is further configured to set an alarm before discarding the communication message (102) when the message source address (X) of the communication message (102) differs from the dedicated source address (A) or when the port number of the communication message (102) differs from the dedicated port number (P1).

8. The network protection entity (100) of one of the preceding claims, comprising:
a configuration interface for filling the appropriate table (105) with configurable values.

9. The network protection entity (100) of one of the preceding claims,
wherein the network protection entity (100) is one of a gateway or a router, in particular a provider-edge router.

10. A method (500) for protecting a communication network against fraud messages, the method (500) comprising:
receiving (501) a communication message over a connection trunk (T1) of a physical interface (101, FE0), wherein the communication message comprises a message source address (X) and a port number (P) and wherein the communication message is directed to a destination within the communication network;
providing (502) an appropriate table (105) which appropriate table (105) is appropriate for indicating a dedicated source address (A) and a dedicated port number (P) for the physical interface (101, FE0) and the connection trunk (T1);
retrieving (503) the dedicated source address (A) and the dedicated port number (P) from the storage (103) and to comparing the message source address (X) with the dedicated source address (A) and the port number (P) with the dedicated port number (P1); and
discarding (504) the communication message (102) if either the message source address (X) differs from the dedicated source address (A) or the port number (P) differs from the dedicated port number (P1),
**characterized by**:
providing (502) the appropriate table based on IP messages sent out over the physical interface (101, FE0), in which IP messages a time-to-live field was set to one.

11. The method (500) of claim 10, comprising:
providing (502) the appropriate table indicating the dedicated source address (A) and the dedicated port number (P) for a combination of the physical interface (FE0) and the connection trunk (T1).

12. The method (500) of claim 11, comprising:
receiving (502) the communication message, the message source address of the communication message comprising an IP source address and a port number; and
discarding (504) the communication message if the IP source address and the port number differ from an allowed combination of an IP source address and a port number for a combination of the physical interface and the connection trunk.

13. Computer program comprising a program code for executing the method of any one of claims 10 to 12 when run on a computer.

## Patentansprüche

1. Netzwerkschutzeinheit (100) zum Schutz eines Kommunikationsnetzwerks gegen Betrugsnachrichten, mit:
einem physikalischen Interface (101, FE0) mit einer Verbindungs-Leitung (T1) zum Empfangen einer Kommunikationsnachricht (102), welche dem physikalischen Interface (FE0) zugeordnet ist, wobei die Kommunikationsnachricht (102) eine Nachrichtenquelladresse (X) und eine Portnummer (P) umfasst und wobei die Kommunikationsnachricht an ein Ziel innerhalb des Kommunikationsnetzwerks gerichtet ist;
einem Speicher (103) zum Speichern einer geeigneten Tabelle (105), wobei die geeignete Tabelle (105) dafür geeignet ist, eine dedizierte Quelladresse (A) und eine dedizierte Portnummer (P1) für das physikalische Interface (101, FE0) und die zugeordnete Verbindungs-Leitung (T1) anzuzeigen; und
einem Prozessor (107), welcher ausgebildet ist, die dedizierte Quelladresse (A) und die dedizierte Portnummer (P) aus dem Speicher (103) abzurufen und die Nachrichtenquelladresse (X) mit der dedizierten Quelladresse (A) und die Portnummer (P) mit der dedizierten Portnummer (P1) zu vergleichen, wobei der Prozessor (107) ferner ausgebildet ist, die Kommunikationsnachricht (102) zu verwerfen, falls entweder die Nachrichtenquelladresse (X) sich von der dedizierten Quelladresse (A) unterscheidet oder die Portnummer (P) sich von der dedizierten Portnummer (P1) unterscheidet,
**dadurch gekennzeichnet, dass** der Prozessor (107) ausgebildet ist, basierend auf über das physikalische Interface (101, FE0) ausgesendeten IP Nachrichten einen Inhalt der geeigneten Tabelle (105) zu erstellen, bei denen ein time-to-live Feld auf Eins gesetzt war.

2. Netzwerkschutzeinheit (100) nach Anspruch 1,
wobei die geeignete Tabelle (105) die dedizierte Quelladresse (A) und die dedizierte Portnummer (P) für eine Kombination aus dem physikalischen Interface (101, FE0) und der zugeordneten Verbindungs-Leitung (T1) anzeigt.

3. Netzwerkschutzeinheit (100) nach Anspruch 2,
wobei die geeignete Tabelle (105) eine erlaubte Kombination aus einer IP Quelladresse (X) und einer Portnummer (P) für die Kombination aus dem physikalischen Interface (101, FE0) und der zugeordneten Verbindungs-Leitung (T1) anzeigt.

4. Netzwerkschutzeinheit (100) nach Anspruch 3,
wobei die Nachrichtenquelladresse (X) und die zugeordnete Portnummer (P1) der Kommunikationsnachricht (102) ferner eine Netzwerkmaske, eine Anzahl der Bytes für maximale Übertragungseinheit und Geschwindigkeitsinformation umfassen; und
wobei die geeignete Tabelle (105) eine erlaubte Kombination aus einer IP Quelladresse (X) und einer Portnummer (P) für die Kombination aus dem physikalischen Interface (101, FE0) und der zugeordneten Verbindungs-Leitung (T1) anzeigt.

5. Netzwerkschutzeinheit (100) nach einem der vorstehenden Ansprüche,
wobei der Prozessor (107) ausgebildet ist, die geeignete Tabelle (105) basierend auf einem Zeitintervall zu erneuern, um gültigen Kommunikationsnachrichten (102) zu erlauben, deren Nachrichtenquelladressen (X) dynamisch geändert werden, um in das Kommunikationsnetzwerk einzutreten.

6. Netzwerkschutzeinheit (100) nach einem der vorstehenden Ansprüche,
wobei der Prozessor (107) ausgebildet ist, die Nachrichtenquelladresse (X) und die Portnummer (P) der Kommunikationsnachricht (102) basierend auf OSI-Layer-2 Inspektion abzurufen.

7. Netzwerkschutzeinheit (100) nach einem der vorstehenden Ansprüche,
wobei der Prozessor (107) ferner ausgebildet ist, einen Alarm vor dem Verwerfen der Kommunikationsnachricht (102) einzustellen, wenn die Nachrichtenquelladresse (X) der Kommunikationsnachricht (102) sich von der dedizierten Quelladresse (A) unterscheidet oder wenn die Portnummer der Kommunikationsnachricht (102) sich von der dedizierten Portnummer (P1) unterscheidet.

8. Netzwerkschutzeinheit (100) nach einem der vorstehenden Ansprüche, mit:
einem Konfigurationsinterface zum Füllen der geeigneten Tabelle (105) mit konfigurierbaren Werten.

9. Netzwerkschutzeinheit (100) nach einem der vorstehenden Ansprüche,
wobei die Netzwerkschutzeinheit (100) ein Gateway oder ein Router, insbesondere ein Provider-Edge-Router ist.

10. Verfahren (500) zum Schutz eines Kommunikationsnetzwerks gegen Betrugsnachrichten, mit:
Empfangen (501) einer Kommunikationsnachricht über eine Verbindungs-Leitung (T1) eines physikalischen Interfaces (101, FE0), wobei die Kommunikationsnachricht eine Nachrichtenquelladresse (X) und eine Portnummer (P) umfasst und wobei die Kommunikationsnachricht an ein Ziel innerhalb des Kommunikationsnetzwerks gerichtet ist;
Bereitstellen (502) einer geeigneten Tabelle (105), wobei die geeignete Tabelle (105) dafür geeignet ist, eine dedizierte Quelladresse (A) und eine dedizierte Portnummer (P) für das physikalische Interface (101, FE0) und die Verbindungs-Leitung (T1) anzuzeigen;
Abrufen (503) der dedizierten Quelladresse (A) und der dedizierten Portnummer (P) aus dem Speicher (103) und Vergleichen der Nachrichtenquelladresse (X) mit der dedizierten Quelladresse (A) und der Portnummer (P) mit der dedizierten Portnummer (P1); und
Verwerfen (504) der Kommunikationsnachricht (102), falls entweder die Nachrichtenquelladresse (X) sich von der dedizierten Quelladresse (A) unterscheidet oder die Portnummer (P) sich von der dedizierten Portnummer (P1) unterscheidet,
**gekennzeichnet durch** das:
Bereitstellen (502) der geeigneten Tabelle basierend auf über das physikalische Interface (101, FE0) ausgesendeten IP Nachrichten, bei denen ein time-to-live Feld auf Eins gesetzt war.

11. Verfahren (500) nach Anspruch 10, mit:
Bereitstellen (502) der geeigneten Tabelle, welche die dedizierte Quelladresse (A) und die dedizierte Portnummer (P) für eine Kombination aus dem physikalischen Interface (FE0) und der Verbindungs-Leitung (T1) anzeigt.

12. Verfahren (500) nach Anspruch 11, mit:
Empfangen (502) der Kommunikationsnachricht, wobei die Nachrichtenquelladresse der Kommunikationsnachricht eine IP Quelladresse und eine Portnummer umfasst; und
Verwerfen (504) der Kommunikationsnachricht falls die IP Quelladresse und die Portnummer sich von einer erlaubten Kombination aus einer IP Quelladresse und einer Portnummer für eine Kombination aus dem physikalischen Interface und der Verbindungs-Leitung unterscheiden.

13. Computerprogramm mit einem Programmcode zum Ausführen des Verfahrens nach einem der Ansprüche 10 bis 12, wenn das Computerprogramm auf einem Computer läuft.

## Revendications

1. Entité de protection de réseau (100) pour protéger un réseau de communication contre des messages frauduleux, l'entité de protection de réseau (100) comportant:
une interface physique (101, FE0) comportant une ligne de connexion (T1) associée à l'interface physique (FE0) pour recevoir un message de communication (102), dans laquelle le message de communication (102) comporte une adresse de source de message (X) et un nombre de port (P) et dans laquelle le message de communication est dirigé vers une destination dans le réseau de communication;
un stockage (103) pour stocker une table appropriée (105), la table appropriée (105) étant appropriée pour indiquer une adresse de source dédiée (A) et un nombre de port dédié pour l'interface physique (101, FE0) et la ligne de connexion associée (T1); et
un processeur (107) qui est conçu pour extraire l'adresse de source dédiée (A) et le nombre de port dédié (P) du stockage (103) et pour comparer l'adresse de source de message (X) avec l'adresse de source dédiée (A) et le nombre de port (P) avec le nombre de port dédié (P1), et dans laquelle le processeur (107) est en outre conçu pour écarter le message de communication (102), soit dans le cas où l'adresse de source de message (X) est différente de l'adresse de source dédiée (A) soit dans le cas où le nombre de port (P) est différent du nombre de port dédié (P1),
**caractérisée en ce que**: le processeur (107) est conçu pour créer un contenu de la table appropriée (105) sur la base des messages IP envoyés par l'intermédiaire de l'interface physique (101, FE0), un champ de temps de vivre étant fixé à un dans les messages IP.

2. Entité de protection de réseau (100) selon la revendication 1,
dans laquelle la table appropriée (105) indique l'adresse de source dédiée (A) et nombre de port dédié (P) pour une combinaison de l'interface physique (101, FE0) et de la ligne de connexion associée (T1).

3. Entité de protection de réseau (100) selon la revendication 2,
dans laquelle la table appropriée (105) indique une combinaison permise d'une adresse de source IP (X) et d'un nombre de port (P) pour la combinaison de l'interface physique (101, FE0) et de la ligne de connexion associée (T1).

4. Entité de protection de réseau (100) selon la revendication 3,
dans laquelle l'adresse de source de message (X) et le nombre de port associé (P) du message de communication (102) comportent en outre une masque de réseau, un nombre de bytes pour unité de transmission maximale et une information de vitesse; et
dans laquelle la table appropriée (105) indique une combinaison permise d'une adresse de source IP (X) et d'un nombre de port (P) pour la combinaison de l'interface physique (101, FE0) et de la ligne de connexion associée (T1).

5. Entité de protection de réseau (100) selon l'une des revendications précédentes,
dans laquelle le processeur (107) est conçu pour renouveler la table appropriée (105) sur la base d'un intervalle de temps afin de permettre à des messages de communication valides d'accéder au réseau de communication, les adresses de source de message (X) étant changées dynamiquement.

6. Entité de protection de réseau (100) selon l'une des revendications précédentes,
dans laquelle le processeur (107) est conçu pour extraire l'adresse de source de message (X) et le nombre de port (P) du message de communication (102) sur la base de l'inspection OSI-couche-2.

7. Entité de protection de réseau (100) selon l'une des revendications précédentes,
dans laquelle le processeur (107) est en outre conçu pour enclencher une alarme avant d'écarter le message de communication si l'adresse de source de message (X) du message de communication (102) est différente de l'adresse de source dédiée (A) ou si le nombre de port du message de communication (102) est différent du nombre de port dédié (P1).

8. Entité de protection de réseau (100) selon l'une des revendications précédentes, comportant:
une interface de configuration pour remplir la table appropriée (105) avec des valeurs configurables.

9. Entité de protection de réseau (100) selon l'une des revendications précédentes,
dans laquelle l'entité de protection de réseau (100) est une passerelle ou un router, en particulier un router provider-edge.

10. Procédé (500) pour protéger un réseau de communication contre des messages frauduleux, le procédé (500) comportant les étapes de:
recevoir (501) un message de communication (102) par l'intermédiaire d'une ligne de connexion (T1) d'une interface physique (101, FE0), dans laquelle le message de communication comporte une adresse de source de message (X) et un nombre de port (P) et dans laquelle le message de communication est dirigé vers une destination dans le réseau de communication;
fournir (502) une table appropriée (105), la table appropriée (105) étant appropriée pour indiquer une adresse de source dédiée (A) et un nombre de port dédié (P) pour l'interface physique (101, FE0) et la ligne de connexion (T1);
extraire (503) l'adresse de source dédiée (A) et le nombre de port dédié (P) du stockage (103) et comparer l'adresse de source de message (X) avec l'adresse de source dédiée (A) et le nombre de port (P) avec le nombre de port dédié (P1); et
écarter (504) le message de communication (102), soit dans le cas où l'adresse de source de message (X) est différente de l'adresse de source dédiée (A) soit dans le cas où le nombre de port (P) est différent du nombre de port dédié (P1),
**caractérisé par** l'étape de:
fournir (502) la table appropriée sur la base de messages IP envoyés par l'intermédiaire de l'interface physique (101, FE0), un champ de temps de vivre étant fixé à un dans les messages IP.

11. Procédé (500) selon la revendication 10, comportant l'étape de:
fournir (502) la table appropriée indiquant l'adresse de source dédiée (A) et le nombre de port dédié (P) pour une combinaison de l'interface physique (FE0) et la ligne de connexion (T1).

12. Procédé (500) selon la revendication 11, comportant l'étape de:
recevoir (502) le message de communication, l'adresse de source de message du message de communication comportant une adresse de source IP et un nombre de port; et
écarter (504) le message de communication si l'adresse de source IP et le nombre de port sont différents d'une combinaison permise d'une adresse de source IP et d'un nombre de port pour une combinaison de l'interface physique et de la ligne de connexion.

13. Programme d'ordinateur comportant un code de programme pour exécuter le procédé selon l'une des revendications 10 à 12 lors de l'exécution sur un ordinateur.
